# EUROPÄISCHE PATENTSCHRIFT

(11) **EP 0 779 779 B1**
(45) Veröffentlichungstag und Bekanntmachung des Hinweises auf die Patenterteilung: **25.11.1998**
(21) Anmeldenummer: 95931984.9
(22) Anmeldetag: 04.09.1995
(51) Int. Cl.: A01G 7/06

(54) **IMPLANTIERBARE FORMKÖRPER ZUR VERABREICHUNG VON WIRKSTOFFEN AN PFLANZEN**
IMPLANTABLE MOULDED BODY FOR ADMINISTERING ACTIVE SUBSTANCES TO PLANTS
ARTICLES MOULES IMPLANTABLES, SERVANT A ADMINISTRER DES PRINCIPES ACTIFS A DES PLANTES

(30) Priorität: 09.09.1994 DE 4432126
(43) Veröffentlichungstag der Anmeldung: 25.06.1997
(73) Patentinhaber: LTS LOHMANN Therapie-Systeme GmbH, 56567 Neuwied (DE)
(72) Erfinder: HOFFMANN, Hans-Rainer, D-56566 Neuwied (DE); KLOCZKO, Malgorzata, D-53545 Linz (DE); ROREGER, Michael, D-56566 Neuwied (DE)
(74) Vertreter: Flaccus, Rolf-Dieter, Dr.
(86) Internationale Anmeldenummer: EP9503473
(87) Internationale Veröffentlichungsnummer: WO9607311

(56) Entgegenhaltungen:
- EP-A- 0 136 476
- EP-A- 0 254 196
- EP-A- 0 289 827
- EP-A- 0 540 932
- WO-A-93/14623
- WO-A-94/06276
- CA-A- 1 089 645
- DE-A- 3 922 366
- DE-U- 1 760 060
- US-A- 3 576 276
- US-A- 4 103 456
- US-A- 4 308 689
- US-A- 4 344 250
- US-A- 4 905 410
- US-A- 5 252 542
- US-A- 5 425 201
- DATABASE WPI Week 9318, Derwent Publications Ltd., London, GB; AN 93-149116 [18] & JP,A,5 085 902 (NIPPON KAYAKU)
- DATABASE WPI Week 8517, Derwent Publications Ltd., London, GB; AN 85-102720 [17] & JP,A,60 048 901 (KUREHA CHEM. IND.)
- DATABASE WPI Week 8315, Derwent Publications Ltd., London, GB; AN 83-36012K [15] & PATENT ABSTRACTS OF JAPAN vol. 007, no. 118 (C-167) & JP,A,58 039 602 (NITTO DENKI KOGYO)
- DATABASE WPI Week 9011, Derwent Publications Ltd., London, GB; AN 90-079170 [11] & JP,A,2 032 001 (DESPAK)

## Beschreibung

Die Erfindung betrifft implantierbare, teilweise biologisch abbaubare polymerhaltige Formkörper zur Verabreichung von Wirkstoffen an Pflanzen, gemäß Oberbegriff des Anspruchs 1, sowie deren Verwendung.

Im Gegensatz zur Human- und Tiermedizin ist eine Verabreichung von Wirkstoffen an Pflanzen mittels implantierbarer Vorrichtungen kaum bekannt. Die praxisüblichen Wirkstoffformulierungen werden entweder auf die Pflanze gesprüht oder in Wurzelnähe in den Boden gebracht. Nachteilig bei diesen konventionellen Anwendungsformen sind hohe, während der Applikation eintretende Wirkstoffverluste, die einerseits zu erheblicher Umweltbelastung (Luft-, Boden- und Wasserkontamination) führen und andererseits höhere Wirkstoffaufwandmengen erfordern.

Der Nachteil der Wirkstoffverluste fällt besonders dann ins Gewicht, wenn Pflanzenschutzmaßnahmen im urbanen Bereich (Alleebäume, städtische Parkanlagen) durchgeführt oder wenn sie im Verlauf einer Vegetationsperiode mehrfach wiederholt werden müssen, wie es zum Beispiel bei landwirtschaftlichen Kulturen mit hohem Schädlingsbefall der Fall ist.

Um einerseits die Gefahren der Umweltbelastung bei der Pflanzenbehandlung zu minimieren und andererseits eine Verlängerung der Wirkdauer von Wirkstoffen zu erreichen, wurden in der Vergangenheit zahlreiche alternative Wirkstoffabgabesysteme entwickelt. Hierzu gehören die in den Patentschriften EP 0 254 196 und DE 39 22 366 beschriebenen Systeme. Sie betreffen Vorrichtungen zur transcuticularen bzw. transperidermalen Applikation von systemischen Wirkstoffen an Pflanzen. Hierbei handelt es sich um Depotzubereitungen in Form von flächigen pflasterähnlichen, haftfähigen und haftklebenden Systemen, die zweckmäßigerweise an einem gewählten Ort der pflanzlichen Sproßachse appliziert werden. Weiterhin sind in DE-GM 17 60 060 und US-PS 4,766,695 dargestellten Wirkstoff-Darreichungsformen zu nennen. Es handelt sich hier lediglich um Baumringe, die insektenabwehrende bzw. insektentötende Wirkstoffe enthalten und somit der Pflanze äußerlichen Schutz bieten. Die genannten Druckschriften enthalten zwar keinen deutlichen Hinweis darauf, daß es sich hier um Systeme zur systemischen Verabreichung von Wirkstoffen handelt, es ist jedoch naheliegend, daß sie aufgrund ihrer Konstruktion und Zusammensetzung als solche fungieren können.

Die in der vorliegenden Schrift bisher erwähnten Wirkstoffabgabesysteme werden extern an der Pflanzenoberfläche angebracht. Somit besitzen sie den Nachteil, daß ihre auf einwandfreier Haftung basierende Funktionsfähigkeit von Umweltbedingungen beeinflußt wird. Darüber hinaus müssen diese Vorrichtungen nach der Systemerschöpfung wieder entfernt werden. Ferner bietet diese Art der Applikation keine befriedigende Aufnahme von Wirkstoffen, da deren Resorption durch Barrieren in Form von schwer durchlässigem Abschlußgewebe erschwert wird.

Eine direkte Verabreichung von Wirkstoffen ins Leitungssystem der Pflanze durch eine Injektion, wie in den Patentschriften US 4,078,087, US 4,103,456, CA 1,089,645 und US 3,576,276 beschrieben, vermag die oben genannten Nachteile zu umgehen, weist jedoch andere Mängel auf. Da die Wirkstoffabgabe sehr schnell und direkt in das Leitungssystem erfolgt, ist sie mit der potentiellen Gefahr des Auftretens zu hoher Wirkstoffkonzentrationen und einer daraus resultierenden Pflanzenschädigung verbunden. Ungünstig ist ebenfalls, daß mehrere Behandlungswiederholungen notwendig sind, damit die erforderliche Wirkstoffkonzentration am Wirkort über längere Zeit gewährleistet werden kann. Die genannten Nachteile können durch Verwendung von Abgabevorrichtungen vermieden werden, die im Inneren der Pflanze positioniert werden und gleichzeitig eine kontinuierliche und langfristige Zufuhr von Wirkstoffen gewährleisten.

Eine Verabreichung von Wirkstoffen an Pflanzen mittels implantierbarer Applikationssysteme ist bereits in der einschlägigen Literatur (Patentschrift AU 8431497 und JP 58039602) erwähnt worden, hat bis jetzt jedoch keinen kommerziellen Status erreicht.

Die Druckschrift AU 8431497 betrifft eine implantierbare Vorrichtung in Form eines porösen Körpers aus Keramik, der in ein mechanisch geschaffenes Loch im Baumstamm positioniert und mit einem externen Wirkstoffreservoir mittels Kapillaren verbunden wird. Die Wirkstoffabgabe, die sich in zwei Teilschritten vollzieht, nämlich Transport aus dem Reservoir und Durchtritt durch den porösen Körper, erfolgt unter Ausnutzung des durch die Transpiration erzeugten, in den Leitungsbahnen herrschenden Druckes und der Kapillarkräfte des porösen Implantates. Der Hauptnachteil eines solchen Applikationssystemes besteht somit darin, daß die Abgabe von Wirkstoffen an die Pflanze ausschließlich von Ihrem Wasserhaushalt abhängig ist, was im Falle einer starken Transpirationsintensität zu einer Wirkstoffüberkonzentration führen kann. Eine genaue Wirkstoffdosierung ist bei der Verwendung dieser Vorrichtung kaum möglich. Darüber hinaus gestaltet sich die Anwendung eines solchen Systems sehr schwierig, da der Implantatkörper nach abgeschlossener Behandlung entfernt werden muß.

Das in der Publikation JP 58039602 beschriebene implantierbare Abgabesystem vermag die soeben dargestellten Nachteile zu umgehen. Es handelt sich hier um implantierbare wirkstoffhaltige Formkörper verschiedener Ausgestaltungen (Tabletten, Stäbchen, Disks usw.), die aus einem Gemisch stark wasserabsorbierender, wie z.B. Stärke-Acrylamid-Copolymere, Stärke-Acrylonitril-Copolymere und hydrophiler Polymere wie Ethylen-Vinylacetat-Copolymer bestehen. Diese Systeme werden zur Abgabe von biologisch aktiven Substanzen an Bäumen verwendet, unter anderem bei der Bekämpfung von Krankheiten, die langzeitige Behandlungen erfordern, wie es z.B. der Fall bei *Ceratocystis* spp. (an *Pinus silvestris*) ist. Sie werden in den zuvor im Stamm eingebohrten Hohlraum (Loch) eingesetzt, wo sie über einen längeren Zeitraum verbleiben. Die durch starke Wasseraufnahme bedingte Quellung resultiert in einer erheblichen Volumenvergrößerung, was dazu führt, daß der gesamte dem Implantat zur Verfügung stehende Raum ausgefüllt wird und die zuvor eingerichtete Öffnung dicht verschlossen wird. Die Druckschrift enthält zwar keinen direkten Hinweis, daß es sich hierbei um biologisch abbaubare Implantate handelt, es ist jedoch naheliegend, daß sie aufgrund ihrer chemischen Zusammensetzung im pflanzlichen Organismus zumindest partiell abgebaut werden können. Somit sind sie im Sinne der vorliegenden Publikation als teilweise biodegradierbar einzustufen und besitzen den Vorteil, daß sie aus den Pflanzen möglicherweise nicht mehr entfernt werden müssen.

Diese Systeme sind jedoch mit zahlreichen Problemen behaftet, die in erster Linie aus ihrem chemischen Aufbau resultieren. Bedingt durch die Tatsache, daß sie ausschließlich aus hydrophilen Polymeren bestehen, eignen sie sich für eine Inkorporierung von stark lipophilen Substanzen nur in beschränktem Maße. Insbesondere dann, wenn eine relativ hohe Wirkstoffbeladung gefordert ist, sind diese Implantationssysteme wenig brauchbar.

Ferner besitzen sie den Nachteil, daß eine hydrophile Polymermatrix nach dem Einbringen in das pflanzliche Gewebe mit einem relativ hohen Zellhydratationszustand den Wirkstoff relativ schnell abgibt. Es werden dadurch zwar hohe Wirkstoffkonzentrationen erzeugt, das System ist jedoch nach kurzer Zeit erschöpft. In vielen Praxisfällen der Wirkstoffverabreichung an Pflanzen, z.B. bei der Behandlung von periodisch auftretenden Erkrankungen mit hohem Infektions- oder Schädlingsbefallsdruck ist jedoch die Aufrechterhaltung einer wirksamen Konzentration über einen längeren Zeitraum erforderlich. Für solche Anwendungen (es seien hier als Beispiele Schorfbefall bei Apfelbäumen in niederschlagsreichen Anbaugebieten oder Triebbohrerbefall bei Bananenkulturen genannt) werden als Träger Polymere benötigt, die dem System Depoteigenschaften verleihen.

Auch das Problem der Wirkstoffverlustgefahr konnte bei diesen Systemen nicht zufriedenstellend gelöst werden. Wie bereits erwähnt, ist das Herstellen eines innigen Kontaktes zwischen dem Implantatskörper und den Grenzflächen des Hohlraumes in der Pflanze von der Wasseraufnahme und somit vom Hydratationszustand der Gewebezellen am Applikationsort sehr stark abhängig. Bekanntermaßen unterliegen die osmotischen Verhältnisse pflanzlicher Zellen je nach Beanspruchungsgrad des Wasserhaushaltes sehr starken Schwankungen. Extrem niedrige bzw. extrem hohe Wasserpotentiale können starke Volumenänderungen des Implantates und somit der Verschlußdichtigkeit der Öffnung im Stamm verändern.

Als weitere Nachteile dieser Systeme seien zuletzt ihre relativ schlechte thermoplastische Verarbeitbarkeit sowie ungenügende mechanische Eigenschaften erwähnt, die ebenfalls aus dem hydrophilen Charakter der Gerüstpolymere resultieren. Dies trifft insbesondere für Implantatmassen mit hohem Anteil (40-90 Gew.-%) an minerlischem Füllstoff zu, wie sie der JP-A-5085902 zu entnehmen sind, die als Bindemittel 0,5 -40 Gew.-% bioabbaubare Polymere mit aliphatischen Polyesterbindungen enthalten. Massen auf der Basis von Klebereiweiß (Gluten), die ggf. weitere wasserlösliche oder -quellbare Polymere enthalten und in Form von Stäbchen er Tabletten in Pflanzen implantiert werden, scheinen bezüglich der Applikation problematisch.

Die Aufgabe der vorliegenden Erfindung bestand nun darin, ausgehend von Massen, wie sie im Oberbegriff des Anspruchs 1 genannt sind, eine Lösung für die oben genannte Problematik vorzuschlagen, indem biologisch abbaubare Wirkstoffabgabesysteme zur inkorporalen Anwendung an Pflanzen geschaffen werden, die sich sowohl für eine schnelle und kurzfristige als auch für eine lange und anhaltende Wirkstofffreisetzung eignen, zufriedenstellende mechanische Eigenschaften aufweisen und bei denen sich die Formmassen, die zu ihrer Herstellung dienen, thermoplastisch einwandfrei verarbeiten lassen.

Erfindungsgemäß wird die Aufgabe mittels Formkörper gemäß dem Wortlaut nach Anspruch 1 gelöst. Im folgenden wird die Erfindung detailliert beschrieben.

Die implantierbaren, teilweise biologisch abbaubaren Formkörper bestehen im wesentlichen aus Polymeren, die mindestens ein hydrophobes Polymer enthalten.Unter dem Begriff "biologisch abbaubar" der in der vorliegenden Schrift äquivalent mit "bioabbaubar" verwendet wird, wird im folgenden verstanden "abbaubar unter Stimulierung durch eine biologisch aktive Umgebung".

Damit sind hier Formkörper gemeint, die sowohl dem Stoffwechsel der höheren Pflanzen zugänglich sind als auch mikrobiell abgebaut werden können. Der biologische Abbau führt zur gleichzeitigen Wirkstofffreigabe und wird durch Bioerosion in der Pflanze eingeleitet. Beim Abbau der erfindungsgemäßen Produkte entstehen hauptsächlich die in ihrer Bioverträglichkeit bekannten Fragmente, die in natürlichen Stoffwechselwegen der Pflanze metabolisiert werden können. Die Intensität und der Umfang des Zerfalls dieser Körper im pflanzlichen Organismus hängen von der Art der Implantatmaterialien ab. Ihre Abbauzeit kann somit durch die geeignete Wahl der Ausgangsstoffe an die Indikationserfordernisse angepaßt werden. Diese Eigenschaft kommt insbesondere der in der gartenbaulichen Praxis bestehenden Vielfalt an Wirkstoffzufuhrbedarf entgegen, da diese Systeme sowohl bei den langzeitorientierten Anwendungen als auch bei Kurzzeitbehandlungen problemlos eingesetzt werden können. Bedingt durch ihre Fähigkeit zur Biodegradation in höheren Pflanzen werden diese Produkte in angemessenem Zeitraum in der Pflanze partiell oder vollständig zersetzt, was ihre Entfernung überflüssig macht. Darüber hinaus werden sie auch nach dem Absterben der Pflanze in den natürlichen Stoffkreislauf eingefügt. Dies ist insofern von besonderem Vorteil, als sie keinerlei Belastung für die Umwelt darstellen. So können die Formkörper in einer mikrobiell aktiven Umgebung teilweise oder vollständig (d.h. zu Wasser, Kohlendioxid und natürlich vorkommenden Stoffwechselprodukten) abgebaut werden.

Die biologische Abbaubarkeit betrifft in erster Linie Polymere, die als Trägermaterialien bei den Implantatkörpern eingesetzt werden. Dabei werden bioaktive Verbindungen in einer inerten Polymermatrix eingebettet, ohne dabei chemisch gebunden zu sein. Es werden Polymere eingesetzt, die einerseits über eine hohe Aufnahmekapazität der Wirkstoffe (Beladbarkeit) und andererseits über die notwendige anwendungstechnische Funktionalität (ausreichende mechanische Stabilität sowie Verarbeitbarkeit) verfügen, nicht phytotoxisch und in breiten Bereichen mit anderen Stoffen mischbar sind. Dabei ist es unerläßlich, daß die Polymermatrix ein hydrophobes Polymer enthält.

Als hydrophobe, biologisch abbaubare Polymere sind folgende Stoffklassen besonders geeignet:
- aliphatische Polyester wie Caprolacton, Poly-3-hyroxybuttersäure, Polyhydroxybuttersäure/Hydroxyvale riansäure-Copolymere und Poly-Milchsäure
- Cellulosederivate mit einem Substitutionsgrad ≤ 2 wie Celluloseether, Celluloseester oder -mischester
- Polyanhydride
- Chitin

Als Beispiel für einen aliphatischen Polyester sei ein Poly-3-hydroxybuttersäure/3-hydroxyvaleriansäure-Copolymer mit einer Molmasse von 450.000 genannt.

Als Beispiel für einen Celluloseether sei Cellulosediethylether genannt.

Als Beispiel für Celluloseester sei Cellulosediacetat oder als Mischester Celluloseacetat-butyrat genannt.

Als Beispiel für Polyanhydride sei Poly-(1,3-bis-p-carboxy-phenoxy-propan/Sebazinsäure)-Copolymer genannt.

Alle hier vorgeschlagenen hydrophoben Polymere sind weitestgehend biologisch abbaubar und thermoplastisch einwandfrei zu verarbeiten.

Der wesentliche Vorteil der erfindungsgemäßen Formkörper liegt darin, daß durch den Einbau hydrophober Polymere in ihre Wirkstoffträgermatrices wird bei den Implantatkörpern eine problemlose Inkorporierung stark lipophiler Wirkstoffe sowie die Möglichkeit einer verzögerten Wirkstofffreisetzung erreicht.

Bekanntermaßen sind hydrophile Eigenschaften bei wirkstoffhaltigen Implantaten von großer Bedeutung, da sie eine schnelle, auf Quellung und/oder Hydrolyse basierende Bioerosion und daraus resultierende rasche Wirkstofffreisetzung gewährleisten. Die Hydrophilie solcher Systeme ist dagegen hinsichtlich der Einarbeitung stark lipophiler bioaktiver Substanzen eher unerwünscht. Durch die Verwendung hydrophober Polymere, die als Vermittlerphase beim Dispergieren von Wirkstoffen fungieren, wird eine relativ homogene Verteilung der inkorporierten Substanzen erzielt.

Aus den erfindungsgemäßen Formkörpern werden nach ihrer Implantation Wirkstoffe im pflanzlichen Organismus freigesetzt. Die Freigabe der Wirkstoffe kann dabei durch ihre Diffusion und/oder durch Quellung bzw. Bioerosion der Implantatkörper erfolgen.
Da die Quellbarkeit und Bioerodierbarkeit durch die hydrophilen Eigenschaften der Polymere positiv (aktivierend) beeinflußt werden, führt der Einbau einer hydrophoben Phase in eine Polymerzusammensetzung zur Verlängerung der Verweildauer eines daraus hergestellten Implantats in der Pflanze und folglich zu einer Verzögerung der Wirkstofffreisetzung. Somit kann (je nach Anteil der hydrophoben Polymere) eine langsame und anhaltende Wirkstofffreisetzung erreicht werden.

Die zur Herstellung der Formkörper dienenden Formmassen lassen sich thermoplastisch problemlos verarbeiten, insbesondere in Anbetracht der Fließfähigkeit und des viskoelastischen Verhaltens der Masse.
Insbesondere dann, wenn eine aus zwei nicht mischbaren Phasen bestehende Polymerzusammensetzung vorliegt, bei der der Zusatz von Plastifiziermitteln zu einer guten Phasendurchmischung erforderlich ist, wird der durch den Einbau der hydrophoben Polymeren erzielte Anstieg der Verarbeitbarkeit der Masse sehr deutlich.

Die erfindungsgemäßen Formkörper weisen folgende Bestandteile auf: 0,5 bis 90 Gew.-% mindestens eines Polymers, wobei der Anteil an einem hydrophoben Polymer mindestens 30 bis 80 Gew.-%, vorzugsweise 50 bis 65 Gew.-%, bezogen auf das Gesamtgewicht des Formkörpers, beträgt. Das Verhältnis zwischen dem Matrixmaterial (Polymeren) und Hilfsstoffen, die zusammen ein Wirkstoffträgersystem des erfindungsgemäßen Formkörpers bilden, kann in weiten Bereichen variiert werden.

Als bioabbaubare Trägermaterialien können zahlreiche Polymere eingesetzt werden. Geeignet sind Polymere von Glykolsäure und Milchsäure sowie deren Copolymere (in verschiedenen Gewichtsverhältnissen der Monomereinheiten). Insbesondere eignen sich Derivate der oben genannten Carbonsäuren von Typ der Polylactide, Polyglycolide und ihrer Copolymeren. Ganz allgemein eignen sich alle Homo- und Copolymeren von α-Hydroxyfettsäuren mit 2 bis 16 C-Atomen und ihre Derivate, soweit diese im pflanzlichen Organismus resorbierbar sind, wie zum Beispiel α-Hydroxybuttersäure, α-Hydroxyisovaleriansäure, α-Hydroxyisocapronsäure, α-Hydroxyheptansäure, α-Hydroxyoctansäure, α-Hydroxydecansäure und α-Hydroxymyristinsäure. Unter den Derivaten der α-Hydroxyfettsäuren sind Polyhydroxyvalerat und Polyhydroxybutyrat sowie ihre Copolymeren besonders hervorgehoben.

Weitere geeignete Polymere zum Einsatz als Wirkstoffmatrix in den erfindungsgemäßen Formkörper sind Polyamide, wobei besonders bevorzugt Polylysinethyl/methylester-fumaramid, Polylysinmethylesterfumaramid, Polylysinethylesterfumaramid und Polylysinbutylesterfumaramid zu nennen sind.

Erfindungsgemäß können die bioabbaubaren Implantate auch natürlich vorkommende Polymere als Wirkstoffträger enthalten. Hierzu seien als besonders geeignet Stärke, Kraftlignin, Chitin, Cellulose sowie ihre Derivate genannt.

Als hydrophobe Komponente der Polymermatrix der erfindungsgemäßen Formkörper können verschiedene biologisch abbaubare Polymere eingesetzt werden. Erläuternde Beispiele sind:
- aliphatische Polyester, z.B. Caprolacton
- Cellulosederivate mit einem Substitutionsgrad ≤ 2, z.B. Cellulose-Diethylether
- Polyannydride, z.B. Poly-(1,3-(p-carboxy-phenoxy-propan/Sebacinsäure)-Copolymer
   Unter den Wirkstoffen, die mittels der erfindungsgemäßen implantierbaren Formkörper an Pflanzen abgegeben werden können, sind Substanzen zu nennen, mit denen Vorgänge im tierischen oder pflanzlichen Organismus beeinflußt werden können. Hierzu sind in erster Linie systemisch wirkende Pflanzenschutzmittel (Insektizide, Akarizide, Fungizide und Bakterizide) zu nennen.

Systemische Insektizide sind beispielsweise Buthocarboxim, Dimethoat, Fenoxycarb, Methamyl, Oxamyl, Oxydemtetonmethyl, Pirimicarb oder Propoxur.

Systemische Akarizide sind beispielsweise Clofentizin, Fenbutation-oxyd und Hexythiazox.

Systemische Fungizide sind beispielsweise Benomyl, Bromuconazol, Bitertanol, Etaconazol, Flusilazol, Furalaxyl, Fosetyl-Al, Imazalil, Metalaxyl, Penconazol, Propiconazol, Thiabendazol, Triadimefon, Triadimenol oder Triforine.

Unter den systemischen Bakteriziden ist beispielsweise Flumenquine zu nennen.

Systemische Wachstumsregulatoren sind beispielsweise Etephon und β-Indolylessigsäure (IES).

Bekanntlich können die genannten systemischen Wirkstoffe nach Applikation von herkömmlichen Zubereitungen durch die Pflanzenorgane (Blatt- und Wurzelwerk, Sproßachse) resorbiert und nach der Resorption im Leitungssystem der Pflanze transportiert und systemisch verteilt werden.

Weitere bioaktive Substanzen, deren Verabreichung mittels erfindungsgemäßen Formkörpern möglich ist, sind Pflanzenstärkungsmittel, wie z.B. Pflanzenauszüge aus Brennessel, Rainfarn, Schachtelhalm oder Staudenknöterich, die sowohl lokale als auch systemische Wirkung haben können.

Die Wirkstoffe können in den erfindungsgemäßen Formkörpern alleine oder in Mischung miteinander vorliegen. Sie können in der inerten Polymermatrix gelöst oder dispergiert sein. Auch hinsichtlich der Teilchengröße der inkorporierten Wirkstoffe sind im Rahmen der vorliegenden Entwicklung viele Variationsmöglichkeiten gegeben. Als bevorzugte Partikelgröße ist der Bereich < 10 µm zu nennen.

Die Funktion der Hilfsstoffe besteht darin, den Wirkstoff der Pflanze in einer geeigneten physikalisch-chemischen Form anzubieten, so daß er für den gewünschten therapeutischen Zweck verfügbar ist. Darüber hinaus bringen sie die einem Wirkstoff innewohnende Potenz optimal zur Wirkung. Als Hilfsstoffe können die erfindungsgemäßen Formkörper Penetrationsförderer, Abbaubeschleuniger, Porenbildner, pH-Regulatoren, Emulgatoren, Füllstoffe, Plastifiziermittel enthalten.

Durch die Penetrationsförderer wird die Aufnahme der bioaktiven Substanz in das Leitungssystem der Pflanze verstärkt. Zu diesem Zweck können beispielsweise Alkylsulfate, Alkylsulfonate, Fettsäuren, Fettsäuresalze mehrwertiger Metalle, Fettsäureester, Aminoxide, Mono-, Di- oder Triglyceride, langkettige Alkohole, Salicylsäure, 2-Pyrrolidonderivate oder Harnstoff zugesetzt werden.

Abbaubeschleuniger sind Substanzen, die die Abbaurate des Implantats beschleunigen. Geeignete Substanzen, die als Abbaubeschleuniger den erfindungsgemäßen Formkörpern zugesetzt werden können, sind beispielsweise Essigsäureester wie Methyl-, Ethyl-, n-Propyl-, iso-Propyl-, n-Butyl-, iso-Butyl-, n-Pentyl- und iso-Pentylester. Besonders bevorzugt ist der Essigsäureethylester, auch als Essigester bezeichnet.

Neben Verbindungen, die die Abbaurate des Trägermaterials beeinflussen, enthalten die erfindungsgemäßen Implantate auch Stoffe in Form von Porenbildnern, die eine Steuerung der Wirkstofffreigabe ermöglichen. Durch das im Formkörper mittels Porenbildnern entstehende Porensystem kann nämlich der Wirkstoff direkt herausdiffundieren oder der Prozeß der Bioerosion wird in Gang gesetzt bzw. beschleunigt. Geeignete Porenbildner sind beispielsweise wasserlösliche Monosaccharide und Disaccharide wie Glukose, Fruktose, Xylose, Galaktose, Sucrose, Maltose, Saccharose und verwandte Verbindungen wie Mannit und Sorbit. Besonders bevorzugt ist Lactose.

Erfindungsgemäß geeignete pH-Regulatoren sind Glycin, Citrat, Borat, Phosphat- oder Citronensäure-Phosphat-Puffer.

Als Emulgatoren können beispielsweise höhere Fettalkohole, Partialfettsäureester, mehrwertige Alkohole, Partialfettsäureester von Zuckern, Polyethylenglykolfettsäureester, Polyethylenglycolsorbitan-Fettsäureester sowie Phospholipide, quartäre Ammoniumverbindungen und Pyridiniumverbindungen Verwendung finden.

Als Füllstoffe kommen Aluminiumoxid, Zinkoxid, Titanoxid und Siliciumdioxid in Betracht.

Durch Plastifiziermittel wird die Verarbeitung der Formmassen, insbesondere während des Vorgangs der Phasendurchmischung und der Formgebung, erleichtert. Als geeignete Plastifiziermittel sind beispielsweise Poly(ethylengylcol)-phenylether (Pycal 94), Glycerin, Sorbitol, Palmitinsäure, Laurinsäure und Ölsäure-Derivate zu nennen.

Die quantitative und qualitative Kombination der Polymere und Formulierungshilfsstoffe, die zusammen ein Trägersystem für den Wirkstoff darstellen, ist maßgebend für die Wirkstofffreigabe, was sich der Fachmann bei der Einstellung der gewünschten Freisetzungsrate zunutze machen kann. Die Vorzugsvarianten der erfindungsgemäßen Formkörper sind auf Basis von abgestuft resorbierbaren Stoffen aufgebaut. Nach einer besonderen Ausführungsform der Erfindung stellt die Trägermatrix der Formkörper eine Kombination von bioabbaubaren Polymeren unterschiedlicher Molekulargewichte dar.

Durch den Abbau der Polymere mit einem kleineren Molekulargewicht erfolgt dann eine frühere Freigabe des Wirkstoffs, während durch den verzögerten Abbau von Polymeren mit hohem Molekulargewicht die Freigabe erst zu einem späteren Zeitpunkt erfolgt. Als niedermolekulare Polymere können die erfindungemäßen Implantate wie beispielsweise Poly-(L-Milchsäure), Poly-(D-Milchsäure), Poly-(DL-Milchsäure), Polyglykolsäure und Copolymere aus den vorgenannten Verbindungen sein. Die Molekulargewichte dieser Verbindungen betragen 1000 bis 4000, vorzugsweise 1500 bis 2500.

Eine weitere bevorzugte Ausführungsform der erfindungsgemäßen Formkörper sind Implantate mit einem zusätzlichen Überzug aus niedermolekularem Polymer, der keinen Wirkstoff enthält. Hierdurch wird verhindert, daß nach der erfolgten Implantation in der Initialphase eine zu schnelle Wirkstoffabgabe erfolgt.

Es ist auch möglich, durch Einbau geeigneter biologisch inaktiver Gruppen, wie z.B. metallorganischer Verbindungen, in das Wirkstoffträgersystem die Abbaugeschwindigkeit des Implantates und somit die Wirkstofffreigaberate in gewünschter Weise zu steuern.

Besonders vorteilhaft sind erfindungsgemäße Formkörper auf Polyesterbasis. Bei diesen ist es nämlich möglich, ihre Abbaugeschwindigkeit durch die Anzahl der Esterbindungen indirekt zu steuern. Bekanntermaßen erhöhen die nach enzymatischen oder hydrotischen Esterspaltungen entstehenden Carboxylgruppen die Hydrophilie des Matrix-Polymeren und damit seine Quellbarkeit im physiologischen Millieu der Pflanze. Durch gezielten Einsatz von Polyester mit bekannter chemischer Struktur und physikalischen Kennwerten kann der Fachmann die Abbauzeit der Formkörper bis zu ihrer vollständigen Solubilisierung im voraus bestimmen und dementsprechend dem gewünschten Anwendungszweck anpassen.

Die physikalischen Wirkstoff/Träger/Hilfsstoff-Kombinatio_ nen, die die erfindungsgemäßen Formkörper darstellen, bilden einen ziemlich harten, mechanisch stabilen, aber gleichzeitig formbaren Verbund. Dieser Verbund kann in verschiedene dreidimensionale Strukturen verarbeitet werden.

Die erfindungsgemäßen Formkörper, sind mehrschichtig aufgebaut, wobei zumindest eine Schicht des Laminates systemischen Wirkstoff enthält. Die einzelnen Verbundschichten sind in Segmente (Kompartimente; 1 in Fig. 1 bis 3) unterteilt. Der Variierung der Anordnung der Kompartimente zueinander sind dabei keine Grenzen gesetzt. Sie können beispielsweise einen sogenannten "Kern"-Aufbau besitzen, bei dem eine Schicht des Laminats von der darüber oder darunter liegenden Schicht umgeben oder eingeschlossen wird und somit einen Kern bildet (siehe Fig. 1). Als eine weitere Segmentanordnung ist eine alternierende Schichtfolge möglich (siehe Fig. 2 und 3).

Durch die Kombination mehrerer Kompartimente können in einfacher Weise Wirkstoffe kombiniert werden und Segmente unterschiedlicher Wirkstoffkonzentrationen gewonnen werden. Die einzelnen Kompartimente können in ihrer Wirkstofffreisetzungsgeschwindigkeit stark variieren. Es ist nicht unbedingt erforderlich, daß alle Kompartimente Wirkstoffe enthalten.

Bedingt durch die Verwendung von Kompartimenten mit unterschiedlichem Freigabeprofil können mit einem Implantat auch verschiedene Wirkstoffe in zeitlich vorherbestimmter Reihenfolge abgegeben werden, was z.B. bei der Therapie von verschiedenartigen, aber vergesellschaftet vorkommenden Krankheiten bei Pflanzen von besonderem Vorteil ist.

Die erfindungsgemäßen Implantate sind als Formstücke nagelförmig und die Teilstücke sind so bemessen, daß sie sich manuell leicht handhaben lassen.

Die Nagelform ist applikationsfördernd und sehr einfach in der Handhabung. Die Spitze 2 ist mechanisch widerstandsfähig ausgebildet. Die mechanische Widerstandsfähigkeit kann durch einen Überzug aus hartem Material, beispielsweise Metall, gewonnen werden. Diese Ausführungsform ist insofern von besonderem Vorteil, als sie den Einsatz von speziellen Implantationsvorrichtungen entbehrlich und die Ausführung der Applikation von einem Nicht-Fachmann möglich macht. Ein weiterer Vorteil dieser Ausgestaltungsform liegt darin, daß der bei der Applikation im Stamm der Pflanze entstehende Hohlraum durch den Kopf des Nagels dicht verschlossen wird. Somit wird die potentielle Gefahr eines Wirkstoffaustritts ausgeschlossen.

Eine weitere besonders vorteilhafte Ausführungsform der erfindungsgemäßen Implantate ist eine Vorrichtung bei der mehrere nagelförmige Teile 5 miteinander verbunden sind, indem sie auf oder in einer starren Platte 4 befestigt sind (Fig. 5). Die Platte kann je nach Anzahl der zu applizierenden Implantate verschiedene Abmessungen haben. Die Platte ist aus einem mechanisch widerstandsfähigen, pflanzengewebesympathischen Material beschaffen. Als besonders geeignetes Material sei hierzu Holz zu nennen. Der besondere Vorteil dieser Ausführungsform liegt darin, daß das Einsetzen der Körper in die verholzten Pflanzenstämme wesentlich erleichtert wird. Diese Ausführungsform ist insbesondere deshalb vorteilhaft, weil mehrere nagelförmige Körper, welche, bedingt durch ihre geringen Ausmaße, einzeln nur unter Schwierigkeiten zu handhaben sind, zu einer Applikationseinbeit zusammengefaßt werden. Darüber hinaus verteilt sich die Schlagkraft auf die Einzelkomponenten relativ gleichmäßig, was die Gefahr einer Gewebeverletzung durch zu starke mechanische Einwirkung minimiert.

Die erfindungsgemäßen Formkörper sind thermoplastisch verarbeitbar und eignen sich daher zur Herstellung nach verschiedenen Methoden, wie z.B. durch Extrusion, Kompression und Spritzguß.

Die erfindungsgemäßen Formkörper können vorteilhaft zur Verabreichung von bioaktiven Substanzen an Pflanzen verwendet werden. Die Wirkstoffe können dabei ganz allgemein Pflanzenschutzmittel (Insektizide, Fungizide, Bakterizide, Akarizide), Pflanzenstärkungsmittel und wachstumsbeeinflussende Substanzen (Phytohormone, Düngemittel) sein. Diese inkorporalen Abgabesysteme werden bevorzugt dann angewendet, wenn eine herkömmliche Applikationstechnik nicht möglich oder nicht verläßlich bzw. nicht sinnvoll ist. Ein besonderes Anwendungsgebiet stellen somit städtische Parkanlagen dar, bei denen Pflanzenschutzmaßnahmen bei Bäumen mittels konventioneller Techniken kaum durchführbar sind. Diese biologisch abbaubaren Implantate eignen sich hervorragend zum Einsatz bei langzeitorientierter Behandlung von Pflanzen, insbesondere Bäumen, z.B. im Obstbau und in der Forstwirtschaft, bei denen bestimmte Erkrankungen regelmäßig saisonbedingt auftreten.

Die erfindungsgemäßen Formkörper werden in die Sproßachse der Pflanze implantiert, wobei der bevorzugte Implantationsort die Triebbasis ist. Besonders geeignet sind die Implantate zum Einsatz bei Pflanzen mit verholzten Trieben (Sträucher und Bäume).

Die Erfindung wird anhand der folgenden Beispiele näher erläutert:

### Beispiel 1:

60 g Poly-3-hydroxybuttersäure (PHB) und 40 g Polyvinylacetat werden in 20 g Chloroform gelöst. Die Lösung wird vorsichtig bei einer Temperatur von 30°C eingedampft und im Vakuum nachgetrocknet. Der so erhaltene kompakte Verbund wird mit einer Kugelmühle pulverisiert und anschließend unter Zugabe von 6 g Polyethylenglykol 400 (PEG 400) und 18 g Fosetyl-Al in einer geeigneten Vorrichtung, z.B. einem Extruder für Thermoplaste, so lange bei einer Temperatur von 180°C erhitzt bis eine verformbare Masse entsteht. Durch Kneten wird der Wirkstoff Fosetyl-Al im erweichten Polymer homogen dispergiert. Die auf diese Weise erhaltene Wirkstoff/Polymer-Suspension wird anschließend durch eine Düse geeigneten Durchmessers (> 2 mm) gepresst. Der dadurch entstehene Strang wird zu stäbchenförmigen Aggregaten zerkleinert, deren Wirkstoffgehalt durch ihre Abmessungen bestimmt wird.

### Beispiel 2:

Im Handel erhältliches Chitinfaservlies wird mit einer Kugelmühle pulverisiert und 375 g dieses Pulvers werden mit 25 g eines Copolymeren aus 75 Mol.-% Lactid und 25 Mol.-% Glykolid und 20 g Triticonazol versetzt. Die so erhaltene Mischung wird gut homogenisiert. Anschließend wird sie in einer geheizten Presse bei 135°C unter einem Druck von etwa 630 bar zwei Minuten lang in einer Metallnegativform zu nagelförmigen Teilstücken verpreßt; jeder Formkörper enthält 89,2 Gew.-% Polymer, 6,0 Gew.-% Copolymer und 4,5 Gew.-% Thiabendazol.

### Beispiel 3:

Eine Mischung, bestehend aus 64 Gew.-% Poly-ε-caprolacton, 22 Gew.-% Poly-Milchsäure , 4 Gew.-% Glycerin und 10 Gew.-% Wirkstoff Fosetyl-Al, wird im Extruder bei einer Temperatur von 120 bis 145°C geschmolzen und anschließend in einem Streichkasten zu einem Film von 2000 µm Dicke ausgezogen. Nach dem Abkühlen wird der Film in stäbchenförmige Teile geschnitten. Gegebenenfalls werden die erhaltenen Teilstücke zu Rollen geformt.

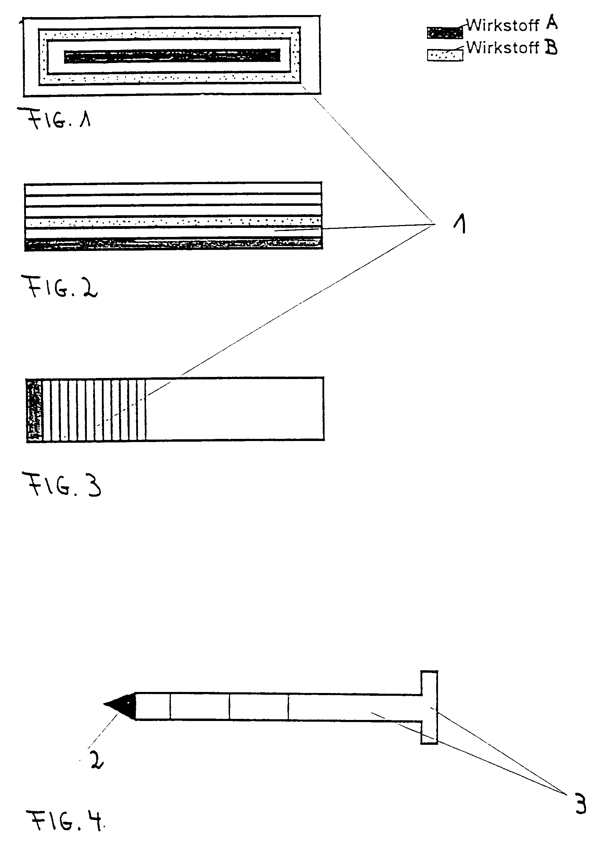

Zur Verdeutlichung der Erfindung werden die Fig. 1 bis 5 nachfolgend erläutert:
Fig. 1 zeigt einen Formkörper, der aus mehreren Kompartimenten (Segmenten) 1 besteht, wobei ein Kompartiment von dem nächsten umgeben wird.

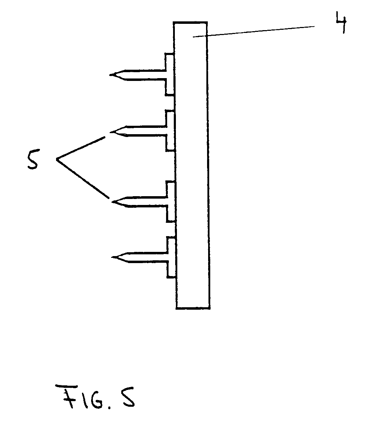

Fig. 2 und 3 zeigen Formkörper, bei denen die einzelnen Segmente alternierend angeordnet sind. Bei der Ausführungsform der Fig. 2 enthalten einzelne Kompartimente verschiedene, voneinander getrennte Wirkstoffe.
   Bei der Ausführungsform der Fig. 3 enthält ein Kompartiment zwei oder mehrere verschiedene Wirkstoffe.
Fig. 4 zeigt einen Formkörper in Nagelform mit gegebenenfalls aushärtbarer Spitze 2 und weiteren Kompartimenten 3.
Fig. 5 zeigt eine besondere Ausführungsform, bei der mehrere nagelförmige Körper 5 zu einer Applikationseinheit zusammengefaßt worden sind, indem sie auf einer starren Platte 4 befestigt sind.

## Patentansprüche

1. Implantierbarer, teilweise biologisch abbaubarer, Polymere enthaltender Formkörper zur Verabreichung von Wirkstoffen an Pflanzen, der mindestens ein hydrophobes Polymer enthält, wobei die Polymere biologisch abbaubar sind und die Wirkstoffreisetzung durch die Bioabbaurate gesteuert wird, und welcher folgende Bestandteile, bezogen auf das Gesamtgewicht des Formkörpers, aufweist:
a) 0,5 bis 90 Gew.-% mindestens eines Polymers, wobei der Anteil an dem hydrophoben Polymer mindestens 30 bis 80 Gew.-%, vorzugsweise 50 bis 65 Gew.-% davon beträgt.
b) 0,5 bis 15 Gew.-% mindestens eines Wirkstoffes,
c) 0,0 bis 50 Gew.-% Formulierungshilfsstoffe,
dadurch gekennzeichnet, daß er in Form eines Nagels vorliegt, dessen Spitze (2) mechanisch widerstandsfähig ausgebildet ist, und daß Schaft sowie Kopf Kompartimente (3) umfassen, von welchen zumindest eines wirkstoffhaltig ist.

2. Formkörper nach Anspruch 1, dadurch gekennzeichnet, daß in verschiedenen Kompartimenten unterschiedliche Wirkstoff-Freisetzungskinetiken bestehen.

3. Formkörper nach Anspruch 1 oder 2, dadurch gekennzeichnet, daß dieser als Vorrichtung mit mehreren nagelförmigen Teilen (5) ausgebildet ist , die durch einen Träger (4) miteinander verbunden sind.

4. Formkörper nach einem der Ansprüche 1 bis 3, dadurch gekennzeichnet, daß die biologisch abbaubaren Polymere aus der Gruppe, bestehend aus Polymilchsäure, Polyglycolsäure, Polylactiden sowie ihren Copolymeren, allen Homo- und Copolymeren von α-Hydroxyfettsäuren mit 2 bis 16 C-Atomen sowie ihren Derivaten, Polyamiden, Polyorthoestern, Polyanhydriden, Stärke, Lignin, Chitin, Cellulose und ihren Derivaten, ausgewählt sind.

5. Formkörper nach einem der Ansprüche 1 bis 4, dadurch gekennzeichnet, daß als hydrophobes Polymer mindestens eines der nachfolgenden Polymere anwesend ist:
- ein aliphatischer Polyester wie Polycaprolacton, Poly hydroxybuttersäure, Polyhydroxybuttersäure/Hydroxyva leriansäure-Copolymer und/oder Polymilchsäure
- ein Cellulosederivat mit einem Substitutionsgrad ≤ 2, wie ein Celluloseether, ein Celluloseester oder ein Celluloseacetat/-butyrat-Mischester
- Chitin
- Kraftlignin
- Polyanhydride

6. Formkörper nach einem der Ansprüche 1 bis 5, dadurch gekennzeichnet, daß sie mindestens einen Wirkstoff aus folgenden Gruppen enthalten:
Insektizide: Buthocaroxim, Dimethoat, Fenoxycarb, Methamyl, Oxamyl, Oxydemteton-methyl, Pirimicarb, Propoxur
Fungizide: Benomyl, Bromuconazol, Bitertanol, Etaconazol, Flusilazol, Furalaxyl, Fosetyl-Al, Imazalil, Metalaxyl, Penconazol, Propiconazol, Triabendazol, Triadimefon, Triadimenol, Triforine
Bakterizide: Flumequine
Akarizide: Clofentizin, Fenbutation-Oxyd, Hexythiazox
Wachstumsregulatoren: Etephon, β-Indolylessigsäure (IES)

7. Verwendung eines Formkörpers nach einem oder mehreren der vorangehenden Ansprüche als in den Körper einer Pflanze einbringbares Implantat zur Verabreichung von Wirkstoffen an die Pflanze.

8. Verwendung eines Formkörpers nach Anspruch 7 zur Implantation, bevorzugt in die Sproßachse der Pflanze und besonders bevorzugt in die Triebbasis der Pflanze.

## Claims

1. Implantable, partially biologically degradable, polymer-containing molded article for the administration of active substances to plants which comprises at least one hydrophobic polymer, the polymers being biodegradable and the active substance release being controlled by the biodegradation rate, and which comprises the following components, relative to the total weight of the molded article:
a) 0.5 to 90%-wt. of at least one polymer, the proportion of the hydrophobic polymer amounting to at least 30 to 80%-wt., preferably 50 to 65%-wt.,
b) 0.5 to 15%-wt. of at least one active substance,
c) 0.0 to 50%-wt. of formulation auxiliary agents,
characterized in that it is present in the form of a nail whose tip (2) is made mechanically resistant, and that shank as well as head include compartments (3) of which at least one comprises active substance.

2. The molded articles according to claim 1 characterized in that there are different active substance kinetics in different compartments.

3. The molded article according to claim 1 or 2 characterized in that it is formed as a device having several nail-shaped members(5) which are connected with one another by means of a support(4).

4. The molded article according to any one of claims 1 to 3 characterized in that the biologically degradable polymers are selected from the group consisting of polylactic acid, polyglycolic acid, polylactides as well as their copolymers, all of the homo- and copolymers of α-hydroxyfatty acids having 2 to 16 C-atoms as well as their derivatives, polyamides, polyorthoesters, polyanhydrides, starch, lignin, chitin, cellulose and its derivatives.

5. The molded article according to any one of claims 1 to 4 characterized in that at least one of the following polymers is present as hydrophobic polymer:
- an aliphatic polyester, such as polycaprolacton, polyhydroxybutanoic acid, polyhydroxybutanoic acid/hydroxyvaleric acid copolymer, and/or polylactic acid
- a cellulose derivative with a degree of substitution of ≤ 2, such as a cellulose ether, a cellulose ester, or a cellulose acetate/butyrate mixed ester
- chitin
- lignin from the Kraft process
- polyanhydrides.

6. The molded article according to any one of claims 1 to 5 characterized in that it comprises at least one active substance from the following groups:
insecticides: butocaroxim, dimethoate, fenoxycarb, methamyl, oxamyl, oxydemeton-methyl, pirimicarb, propoxur
fungicides: benomyl, bromuconazole, bitertanole, etaconazole, flusilazol, furalaxyl, fosetyl-Al, imazalil, metalaxyl, penconazole, propiconazole, thiabendazol, triadimefon, triadimenol, triforine
bactericides: flumequine
acaricides: clofentizine, fenbutatin oxide, hexythiazox.
growth regulators: ethephon, β-indolylacetic acid (IAA).

7. The use of a molded article according to one or several of the preceding claims as an implant which is incorporable into the body of a plant for the administration of active substances to the plant.

8. The use of a molded article according to claim 7 for implantation, preferably into the shoot axis of the plant, and most preferably into the sprout base of the plant.

## Revendications

1. Article moulé implantable, partiellement biodégradable contenant des polymères pour l'administration de principes actifs à des plantes, qui contient au moins un polymère hydrophobe, les polymères étant biodégradables et la libération de principes actifs étant contrôlée par le taux de biodégradation, et qui présente les constituants suivants, par rapport à la masse totale de l'article moulé :
a) 0,5 à 90% en poids d'au moins un polymère, la teneur du polymère hydrophobe s'élevant à au moins 30 à 80 % en poids, de préférence à 50 à 65 % en poids,
b) 0,5 à 15% en poids d'au moins un principe actif,
c) 0,0 à 50 % en poids d'adjuvants de formulation,
caractérisé en ce qu'il présente la forme d'un clou dont la pointe (2) est conçue de façon mécaniquement résistante et en ce que la tige, de même que la tête comporte des compartiments (3) dont au moins un contient du principe actif.

2. Article moulé selon la revendication 1, caractérisé en ce que dans les différents compartiments ont lieu des cinétiques différentes de libération du principe actif.

3. Article moulé selon la revendication 1 ou 2, caractérisé en ce que celui-ci est conçu sous forme d'un dispositif avec plusieurs parties en forme de clou (5), qui sont reliées ensemble par un support (4).

4. Article moulé selon l'une des revendications 1 à 3, caractérisé en ce que les polymères biodégradables sont choisis dans le groupe constitué de l'acide polylactique, de l'acide polyglycolique, des polylactides, de même que de leurs copolymères, de tous les homo- et copolymères d'acides gras α-hydroxylés avec 2 à 16 atomes de carbone de même que de leurs dérivés, polyamides, polyorthoesters, polyanhydrides, de l'amidon, de la lignine, de la chitine, de la cellulose et de leurs dérivés.

5. Article moulé selon l'une des revendications 1 à 4, caractérisé en ce qu'au moins un des polymères suivants est présent à titre de polymère hydrophobe :
- un polyester aliphatique, tel que la polycaprolactone, l'acide polyhydroxybutyrique, un copolymère d'acide polyhydroxybutyrique et d'acide hydroxyvalérique et/ou l'acide polylactique
- un dérivé de la cellulose avec un degré de substitution inférieur ou égal à 2, tel qu'un éther de cellulose, un ester de cellulose ou un ester mixte d'acétate de cellulose et de butyrate de cellulose
- la chitine
- la lignine kraft
- des polyanhydrides.

6. Articles moulés selon l'une des revendications 1 à 5, caractérisés en ce qu'ils contiennent au moins un principe actif des groupes suivants :
les insecticides : le buthocaroxime, le diméthoate, le fénoxycarb, le méthamyl, l'oxamyl, l'oxydemtéton-méthyle, le pirimicarb, le propoxur
les fongicides : le bénomyl, le bromuconazol, le bitértanol, l'étaconazol, le flusilazol, le furalaxyl, le fosétyl-Al, l'imazalil, le métalaxyl, le penconazol, le propiconazol, le thiabendazol, le triadiméfon, le triadiménol, la triforine
les bactéricides : la fluméquine
les acaricides : la clofentizine, l'oxyde de fenbutation, l'hexythiazox
les régulateurs de la croissance : l'étéphon, l'acide β-indolylacétique (IES).

7. Utilisation d'un article moulé selon une ou plusieurs des revendications précédentes à titre d'implantat pouvant être introduit dans le corps d'une plante pour l'administration de principes actifs à la plante.

8. Utilisation d'un article moulé selon la revendication 7, pour l'implantation, de préférence dans l'axe de croissance de la plante et d'une manière particulièrement préférée dans la base des pousses de la plante.
